# EUROPEAN PATENT APPLICATION

(11) **EP 2 759 905 A2**
(43) Date of publication of application: **30.07.2014**
(21) Application number: 13196398.5
(22) Date of filing: 10.12.2013
(51) Int. Cl.: G06F 1/28

(54) **Information processing apparatus, method of controlling power consumption, and storage medium**

(30) Priority: 24.01.2013 JP 2013011490
(71) Applicant: FUJITSU LIMITED, Kawasaki-shi, Kanagawa 211-8588 (JP)
(72) Inventor: Hatamori, Shuei, Kanagawa 211-8588 (JP)
(74) Representative: HOFFMANN EITLE

(57) **Abstract**

An information processing apparatus includes a processing module, a power supply device that supplies power to the processing module, and a signal generation circuit that, when overcurrent of the power supply device is detected, generates a first signal instructing suppression of power consumption of the processing module, and outputs the first signal to the processing module.

## Description

### TECHNICAL FIELD

The embodiment discussed herein is related to a technique of controlling power consumption of an information processing apparatus including a power supply device.

### BACKGROUND ART

Some information processing apparatuses typified by computers include a plurality of power supply devices. In an information processing apparatus including a plurality of processing modules that may be caused to operate individually, power consumption varies with the number of processing modules which are caused to operate. Thus, in the information processing apparatus including the plurality of processing modules, a plurality of power supply devices are included. Examples of the processing modules include a server blade, a system board, and an input/output (IO) unit.

In many of information processing apparatuses including a plurality of power supply devices, power consumed by processing modules which are operating is monitored, and a combination (the number) of power supply devices which are to be caused to supply power among the plurality of power supply devices is determined in accordance with the monitoring result. This is for the purpose of supplying power to be used while maintaining high conversion efficiency of the power supply devices. Maintaining high conversion efficiency also enables suppression of power consumption of the entire information processing apparatus.

In a power supply device, there is provided an overcurrent protection function for suppressing occurrence of overcurrent so that the power supply device itself, or a load to which power is supplied is not damaged. When a current regarded as a current that is causing overcurrent flows, this overcurrent protection function limits the amount of current to be output and reduces an output voltage.

Electronic components, such as a central processing unit (CPU) and a semiconductor memory that are installed in a processing module, are being designed to operate at low voltages. With this design for lower voltages, the tolerance of electronic components to variations in voltage becomes smaller. For this reason, a reduction in the output voltage in the power supply device may cause an electronic component to malfunction. Malfunction of an electronic component will cause a system failure. Because of this, it is very important to suppress occurrence of overcurrent in the power supply device.

In the information processing apparatus including a plurality of power supply devices, a management device installed in the information processing apparatus controls power supply. The management device typically monitors power consumed by processing modules which are operating, and determines, in accordance with the monitoring result, a combination of power supply devices which are to be caused to supply power among the plurality of power supply devices. When a combination of power supply devices which are to be caused to supply power is determined in accordance with actually consumed power, high conversion efficiency of the power supply devices may be maintained.

In order to suppress occurrence of overcurrent in the power supply devices, an existing management device monitors power consumption of processing modules at relatively short time intervals, also monitors power supply devices which are operating, and deals with a failure having occurred in any of the power supply devices quickly. When a failure occurs in one or more of the power supply devices which are operating, the management device causes a power supply device which is not operating to operate, or reduces the power consumption of all the processing modules if there is no power supply device which may be caused to operate. Because of this, the load of controlling power supply in the existing management device is heavy.

In a present-day information processing apparatus, a management device also tends to perform a control operation in addition to control of power supply because reduction in the number of components reduces manufacturing costs. Thus, in some cases, the management device, for example, checks the temperature of each processing module, performs cooling control in accordance with the checked temperature, and monitors the state of a component. Because of this, it is important to suppress the load of controlling power supply. Examples of the related art are disclosed in Japanese Laid-open Patent Publication No. 2009-60758, Japanese Laid-open Patent Publication No. 11-338555, Japanese Laid-open Patent Publication No. 2004-185619, and Japanese Laid-open Patent Publication No. 10-91298.

### SUMMARY

### TECHNICAL PROBLEM

According to an aspect of the invention, an apparatus includes a memory, a processor coupled to the memory, a power supply device that supplies power to the processor, and a signal generation circuit that, when overcurrent of the power supply device is detected, generates a first signal instructing suppression of power consumption of the processor, and outputs the first signal to the processor.

### SOLUTION TO PROBLEM

According to an aspect of the invention, an information processing apparatus includes a processing module, a power supply device that supplies power to the processing module, and a signal generation circuit that, when overcurrent of the power supply device is detected, generates a first signal instructing suppression of power consumption of the processing module, and outputs the first signal to the processing module.

### ADVANTAGEOUS EFFECTS OF INVENTION

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 illustrates an example of the configuration of an information processing apparatus according to an embodiment;
FIG. 2 illustrates an example of a mechanism for controlling the amount of power consumption of the information processing apparatus according to the embodiment;
FIG. 3 illustrates an example of the configuration of a partition priority definition file;
FIG. 4 is a flowchart of a throttling control process; and
FIG. 5 illustrates an example of a sequence performed when a failure occurs in a PSU.

### DESCRIPTION OF EMBODIMENTS

An embodiment will be described in detail below with reference to the drawings.

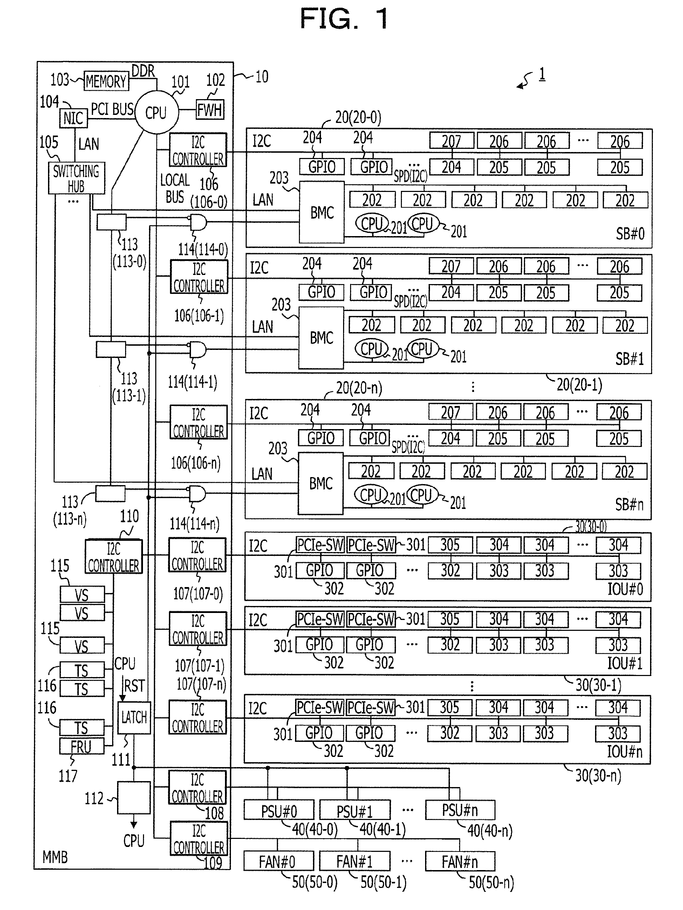

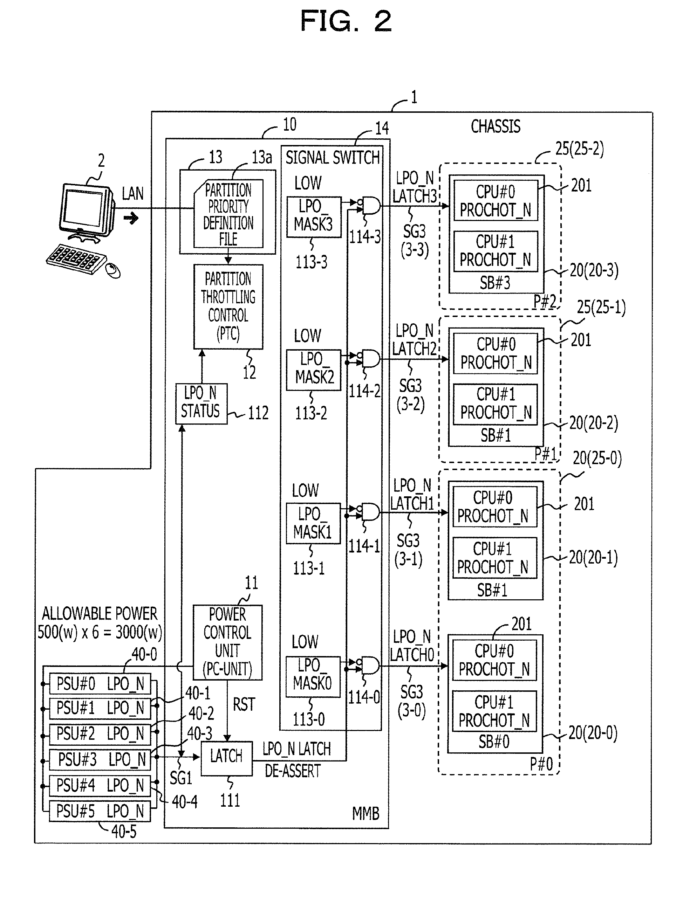

FIG. 1 illustrates an example of the configuration of an information processing apparatus according to the embodiment. FIG. 2 illustrates an example of a mechanism for controlling the amount of power consumption of the information processing apparatus according to the embodiment.

As illustrated in FIG. 1, an information processing apparatus 1 according to the embodiment includes a management board (MMB) 10, a plurality of system boards (SB's) 20 (20-0 to 20-n), a plurality of input/output (IO) units 30 (30-0 to 30-n), a plurality of power supply units (PSU's) 40 (40-0 to 40-n), and a plurality of fans 50 (50-0 to 50-n). The information processing apparatus 1 is a server in which one or more system boards 20 and one or more IO units 30 may be combined to form one partition (group). In the system board 20-n, the IO unit 30-n, the PSU 40-n, and the fan 50-n, each "n" denotes a certain integer of 0 or more. These "n" differ in accordance with the type of components, that is, the system board 20-n, the IO unit 30-n, the PSU 40-n, and the fan 50-n.

Each system board 20 is a processing module for data processing. As illustrated in FIG. 1, each system board 20 includes a plurality of central processing units (CPU's) 201, a plurality of memory modules (MEM's) 202, a baseboard management controller (BMC) 203, a plurality of general purpose input/outputs (GPIO's) 204, a plurality of thermal sensors (TS's) 205, a plurality of voltage sensors (VS's) 206, and a field replaceable unit read only memory (FRU) 207. The FRU 207 is a memory device that stores component information with which a component that is to be replaced and is to be subject to maintenance by a customer engineer is provided.

The BMC 203 is a management device dedicated to management of the system board 20. Each CPU 201 is connected to the BMC 203 so as to monitor on/off operations and an error, and to control power consumption. Although each thermal sensor 205, each voltage sensor 206, each GPIO 204, and the FRU 207 are provided in the system board 20, they are managed by the MMB 10.

Each IO unit 30 is a processing module for input/output of data. As illustrated in FIG. 1, each IO unit 30 includes a plurality of Peripheral Component Interconnect Express (PCIe) switches 301, a plurality of GPIO's 302, a plurality of thermal sensors 303, a plurality of voltage sensors 304, and an FRU 305. A device that performs input/output of data, such as a hard disk device or a network interface card (NIC), is connected to any of the PCIe switches 301.

The MMB 10 is a management device dedicated to management of the entire information processing apparatus 1. The MMB 10 provides a user interface to a terminal device 2 connected thereto, and enables monitoring of a state of hardware, display of configuration information, display of error information, partition management, network management, and operational management, such as power supply control. The MMB 10 and each system board 20 are connected using a local area network (LAN) and an Inter-Integrated Circuit (I2C). The MMB 10 and each IO unit 30 are connected using an I2C.

As illustrated in FIG. 1, the MMB 10 includes a CPU 101, a firm-ware hub (FWH) 102, a memory 103, an NIC 104, and a switching hub 105. In the FWH 102, firmware executed by the CPU 101 is stored. The CPU 101 reads the firmware stored in the FWH 102 into the memory 103, executes it, thereby controls the entire information processing apparatus 1, and provides the user interface to the terminal device 2. In communication with the terminal device 2, the NIC 104 is used.

The switching hub 105 is connected to the NIC 104. The switching hub 105 and each system board 20 are connected using the LAN. Thus, the CPU 101 communicates with each system board 20 via the NIC 104 and the switching hub 105.

To the CPU 101, there are connected a plurality of I2C controllers 106 (106-0 to 106-n) for communication with the system boards 20, a plurality of I2C controllers 107 (107-0 to 107-n) for communication with the IO units 30, an I2C controller 108 for communication with the PSU's 40, an I2C controller 109 for controlling the fans 50, and an I2C controller 110 for communication of data in the MMB 10.

A plurality of voltage sensors 115 and a plurality of thermal sensors 116, and an FRU 117 are connected to the I2C controller 110. Thus, the CPU 101 acquires, via the I2C controller 110, digital values output by each voltage sensor 115 and each thermal sensor 116, and deals with the acquired digital values and recognizes an internal state of the MMB 10.

The plurality of I2C controllers 106 (106-0 to 106-n) for communication with the system boards 20 are respectively provided for the system boards 20. Each GPIO 204, each thermal sensor 205, each voltage sensor 206, and the FRU 207 which are provided in each system board 20 corresponding to a certain I2C controller 106 are connected to the I2C controller 106. Similarly, the plurality of I2C controllers 107 (107-0 to 107-n) for communication with the IO units 30 are respectively provided for the IO units 30. Each PCIe switch 301, each GPIO 302, each thermal sensor 303, each voltage sensor 304, and the FRU 305 which are provided in each IO unit 30 corresponding to a certain I2C controller 107 are connected to the I2C controller 107. Thus, the CPU 101 of the MMB 10 directly recognizes states of each system board 20 and each IO unit 30.

Each PSU 40 outputs an overcurrent detection signal LPO_N representing whether or not overcurrent is occurring. In the MMB 10, two latches 111 and 112 capable of retaining a logical sum of overcurrent detection signals LPO_N's output by the PSU's 40 are provided. The latch 112 is used in order that the CPU 101 checks a state of an overcurrent detection signal LPO_N. Here, when overcurrent is occurring, it is assumed that an overcurrent detection signal LPO_N is asserted and a value of the asserted overcurrent detection signal LPO_N is 1, that is, the level of the signal is high (H).

On the other hand, the latch 111 is connected to input terminals of AND gates 114 (114-0 to 114-n). Inverse values of values of different registers 113 (113-0 to 113-n) are respectively input to other input terminals of the AND gates 114. The register is, for example, a latch. Thus, each AND gate 114 outputs a logical product of a value input from the latch 111 (a value of an overcurrent detection signal LPO_N) and an inverse value of a value of the register 113 corresponding to the AND gate 114.

A combination of one AND gate 114 and one register 113 is provided for each system board 20. This is because, in the embodiment, only the system boards 20 among the system boards 20 and the IO units 30 are targeted for control of power consumption. The reason why each AND gate 114 is connected to the latch 111 is because power consumption of the system board 20 whose power consumption is to be suppressed is quickly and automatically suppressed by using the fact that an overcurrent detection signal LPO_N has been asserted as a trigger. The CPU 101 performs a reset (RST) of the latch 111 so that the power consumption of the system board 20 whose power consumption is to be suppressed is quickly suppressed.

The reason why only the system boards 20 among the system boards 20 and the IO units 30 are targeted for control of power consumption is because, unlike each IO unit 30, the power consumption of each system board 20 may be suppressed without stopping any of components.

Nowadays, with advances in semiconductor technology, a large number of transistors are installed in an arithmetic processing unit, such as each CPU 201. Thus, in each system board 20, the proportion of power consumed by the installed CPU's 201 is high. However, in many of the CPU's 201, a power saving function has become provided.

The power saving function is, for example, a dynamic voltage frequency scaling (DVFS) function. This DVFS function enables a reduction in power-supply voltage which is applied to an arithmetic processing unit, such as a CPU, and/or a reduction in clock frequency which is used by the arithmetic processing unit. Even when either the power-supply voltage or the clock frequency is reduced, the power consumption of the arithmetic processing unit may be suppressed.

With the reduction in either the power-supply voltage or the clock frequency, processing performance is also reduced. In particular, the clock frequency significantly affects the processing performance. However, even when the processing performance is reduced, the arithmetic processing unit may continue performing processing. Because of this, in the embodiment, only the system boards 20 are targeted for suppression of power consumption.

When a value of the logical product input from each AND gate 114 is 1, that is, when a signal output by the AND gate 114 is H, the BMC 203 installed in the system board 20 corresponding to the AND gate 114 gives an instruction to suppress power consumption to each CPU 201. Thus, the power consumption of the system board 20 in which the value of the logical product input from the AND gate 114 is 1 is suppressed by using the fact that an overcurrent detection signal LPO_N has been asserted as a trigger.

As illustrated in FIG. 2, the above-described MMB 10 functions as a power control unit 11, a partition throttling control 12, a memory unit 13, and a signal switch 14.

In FIG. 2, only the system boards 20 are illustrated as processing modules. This is because only the system boards 20 are targeted for suppression of power consumption. In FIG. 2, illustration of the IO units 30 which are not targeted for suppression of power consumption is omitted for the sake of clarity, and four system boards 20 are illustrated. Six PSU's 40 which are used for supply of power to the four system boards 20 are illustrated. In FIG. 2, maximum power consumption of each system board 20 is 750 W and a power rating of each of the PSU's 40 (40-0 to 40-5) is, for example, 500 W. Assuming that power to be supplied to each IO unit 30, each fan 50, and so forth is uniform, a PSU 40 which is used for supply of the uniform power is omitted from FIG. 2.

The power control unit 11, the partition throttling control 12, the memory unit 13, and the signal switch 14 have respectively the following functions.

The power control unit 11 recognizes the installed PSU's 40 and determines, among the recognized PSU's 40, a PSU 40 which is caused to supply power. In the case where, for example, the BMC 203 installed in each system board 20 calculates power consumption of its system board 20, the number of PSU's 40 which are caused to supply power is changed in accordance with the power consumption calculated by the BMC 203 of the system board 20. Alternatively, in the case where there is a measurement unit, such as a power sensor that measures power supplied from each PSU 40, the power control unit 11 may determine, in accordance with a measurement from the measurement unit, the number of PSU's 40 which are caused to supply power.

In the configuration of the MMB 10 illustrated in FIG. 1, control is performed by the CPU 101 that reads the firmware stored in the FWH 102 into the memory 103 and executes it. Recognition of the PSU's 40 is performed via the I2C controller 108, and the amount of power consumption calculated by the BMC 203 of each system board 20 is acquired via the I2C controller 106 corresponding to the system board 20. Thus, in the configuration of the MMB 10 illustrated in FIG. 1, the power control unit 11 is implemented by, for example, the CPU 101, the FWH 102, the memory 103, each I2C controller 106, and the I2C controller 108.

The signal switch 14 is used to specify a system board 20 to be targeted for suppression of power consumption among the system boards 20. A combination of an AND gate 114 and a register 113 is provided for each system board 20. All combinations provided for the system boards 20 are components of the signal switch 14.

The partition throttling control 12 sets a setting of the signal switch 14. The setting is set with reference to a partition priority definition file 13a that is able to be stored in the memory unit 13.

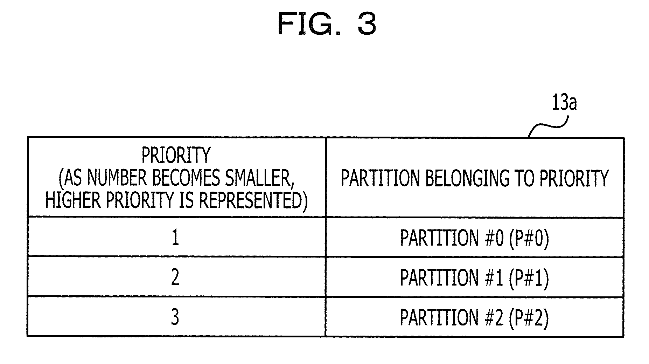

FIG. 3 illustrates an example of the configuration of a partition priority definition file.

In the information processing apparatus 1 capable of including a plurality of system boards 20, one or more system boards 20 may be combined into one partition. When the system boards 20 are caused to perform certain respective processes, the system boards 20 may each be assumed to be one partition. Because of this, in the embodiment, suppression of power consumption based on priority is performed on a partition-by-partition basis. The partition priority definition file 13a is information used for suppression of power consumption on a partition-by-partition basis.

FIG. 2 illustrates an example of partitions 25 to which the system boards 20 belong. In the example illustrated in FIG. 2, two system boards 20-0 and 20-1 belong to a partition 25-0, a system board 20-2 belongs to a partition 25-1, and a system board 20-3 belongs to a partition 25-2.

As illustrated in FIG. 3, for each piece of priority information, information on a partition to which a priority represented by the piece of priority information is assigned is stored in the partition priority definition file 13a. In FIG. 3, "1" to "3" denote an example of pieces of priority information. As the number becomes smaller, the priority becomes higher. In FIG. 3, "partition #0 (P#0)" to "partition #2 (P#2)" denote an example of pieces of partition information. The example is, for example, a partition number. The example of the partition priority definition file 13a illustrated in FIG. 3 illustrates that partitions targeted for suppression of power consumption are added in the order of the partition 25-2, the partition 25-1, and the partition 25-0. The partition priority definition file 13a is stored in the memory unit 13 by being transmitted from the terminal device 2, or alternatively, by specifying the content thereof from the terminal device 2.

The partition throttling control 12 refers to the partition priority definition file 13a, identifies, among the registers 113, a register 113 in which "0" is to be stored, and stores "0" in the identified register 113. Then, the partition throttling control 12 monitors a value retained in the latch 112. When "0" is retained in the latch 112, that is, when an overcurrent detection signal LPO_N is asserted, the partition throttling control 12 causes a register 113 in which "0" is secondly to be retained to retain 0. In this way, a system board 20 whose power consumption is to be suppressed is added.

The partition throttling control 12 adds a system board 20 whose power consumption is to be suppressed until an overcurrent detection signal LPO_N is not asserted. Thus, the partition throttling control 12 suppresses, via the signal switch 14, power consumption of a system board 20 whose power consumption has to be suppressed so that a de-asserted overcurrent detection signal LPO_N is output from any of the PSU's 40.

The partition throttling control 12 refers to the latch 112 retaining an overcurrent detection signal LPO_N and thereby checks a result indicating that "0" is stored in another register 113. This is because, as long as any one of the PSU's 40 asserts an overcurrent detection signal LPO_N, a value of the asserted overcurrent detection signal LPO_N is retained in the latch 112 like the latch 111.

When the partition priority definition file 13a is not stored in the memory unit 13, for example, the partition throttling control 12 stores "0" ("Low" indicated in FIG. 2) in all the registers 113. Thus, the partition throttling control 12 suppresses power consumption of all the partitions 25 by using assertion of an overcurrent detection signal LPO_N.

In the configuration of the MMB 10 illustrated in FIG. 1, the partition throttling control 12 is implemented by, for example, the CPU 101, the FWH 102, and the memory 103. The memory unit 13 is, for example, the memory 103.

In order that none of the PSU's 40 are put into an overcurrent state, the number of PSU's 40 which are caused to supply power may correspond to the number of system boards 20 which are caused to operate. Thus, in many cases, any of the PSU's 40 is put into an overcurrent state when a failure occurs in one or more PSU's 40 among PSU's 40 which are supplying power. Since it is rare that a failure occurs in a plurality of PSU's 40 in a short time period, a failure typically occurs in one PSU 40.

Due to a failure having occurred in one or more PSU's 40, another PSU 40 which is supplying power may be put into an overcurrent state. However, when the PSU 40 in the overcurrent state asserts an overcurrent detection signal LPO_N, power consumption of one or more system boards 20 is automatically suppressed by using the assertion of the overcurrent detection signal LPO_N as a trigger. Thus, even when there is a PSU 40 that is not brought out of an overcurrent state by suppression of power consumption of one or more system boards 20, the degree of the overcurrent state is suppressed. Suppression of the degree of the overcurrent state increases a time period for which the overcurrent state may be tolerated. As a result, monitoring of each PSU 40 and monitoring of power consumption of each system board 20 do not have to be done so that an overcurrent detection signal LPO_N is not asserted.

Specifically, the power control unit 11 changes the number of PSU's 40 which are caused to supply power in accordance with occurrence of system boards 20 whose operation is started or stopped. Alternatively, the power control unit 11 may be caused to operate by using assertion of an overcurrent detection signal LPO_N. The partition throttling control 12 is caused to operate by using assertion of an overcurrent detection signal LPO_N.

In this way, both the power control unit 11 and the partition throttling control 12 may be temporarily caused to operate. This may significantly reduce a load, per unit time, on the CPU 101 for implementing the power control unit 11 and the partition throttling control 12.

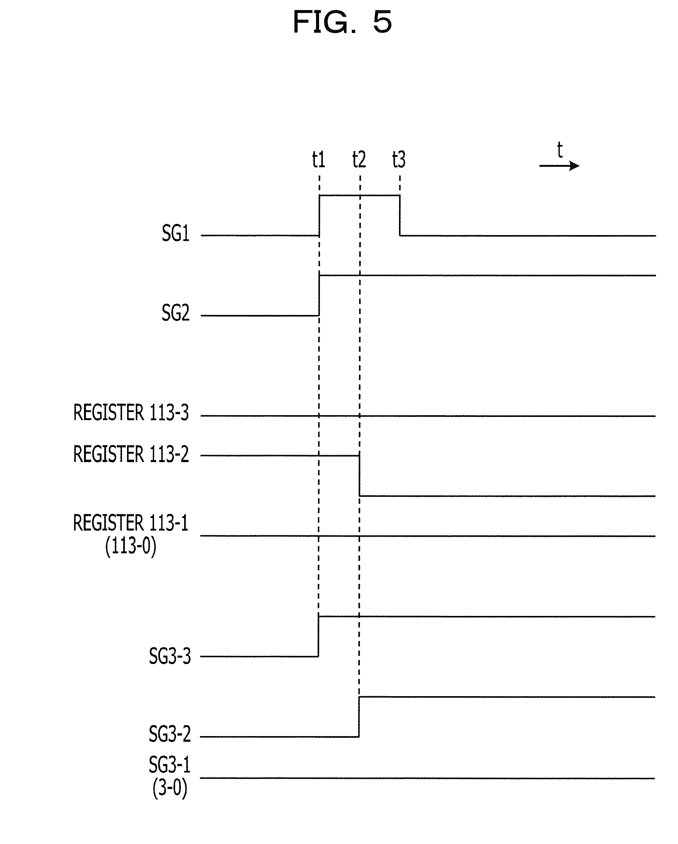

FIG. 5 illustrates an example of a sequence performed when a failure occurs in a PSU, that is, when an overcurrent detection signal LPO_N is asserted. In FIG. 5, SG1 denotes a value of a logical sum of overcurrent detection signals LPO_N's output by the PSU's 40, SG2 denotes a value retained in the latch 111, registers 113-0 to 113-3 respectively denote values stored in the corresponding registers 113, and SG3-0 to SG3-3 respectively denote values of logical products output from the AND gates 114-0 to 114-3. The value of the logical sum of overcurrent detection signals LPO_N's, the retained value, and the values of the logical products are each represented by using "0" or "L" and "1" or "H".

In FIG. 5, an example where the setting of the signal switch 14 is set in accordance with the partition priority definition file 13a illustrated in FIG. 3 is given. For example, a failure occurs in one of the six PSU's 40. As for power consumed by each partition 25 immediately before a failure occurs, the power consumption of the partition 25-0 is, for example, 1500 W, and that of each of the partitions 25-1 and 25-2 is, for example, 700 W. Power consumption to be suppressed is, for example, half of the power previously consumed.

When a failure occurs in any one of the PSU's 40, a maximum amount of power which may be supplied is 2500 W. Since the amount of power consumed by the partitions 25 is 2900 W, that is, the total sum of 1500 W, 700 W, and 700 W, one or more PSU's 40 in which a failure has not occurred assert an overcurrent detection signal LPO_N. Thus, the SG1 becomes "H" (a logical value is "1") at a time t1. With the change, the SG2 also becomes "H". At this time, the values stored in the registers 113-0 to 113-2 are each "1", and the value stored in the register 113-3 is "0". Because of this, the SG3-3 also becomes "H" at the time t1.

When the SG3-3 becomes "H", the partition 25-2, that is, the system board 20-3 suppresses its power consumption and reduces the power consumption from 700 W to 350 W. However, because the power consumption of all the partitions 25 is 2550 W, the SG1 is maintained in an "H" state. Because of this, the partition throttling control 12 rewrites the value of the register 113-2 from "1" to "0" at a time t2. In accordance with the rewriting of the value, the SG3-2 becomes "H".

When the SG3-2 becomes "H", the partition 25-1, that is, the system board 20-2 suppresses its power consumption and reduces the power consumption from 700 W to 350 W. This reduction causes the power consumption of all the partitions 25 to become 2200 W and to become lower than the amount of power which may be supplied by all the PSU's 40. Because of this, the SG1 becomes "L" at a time t3. When the SG1 becomes "L", control performed by the partition throttling control 12 ends.

When a PSU 40 that is capable of operating exists, the power control unit 11 causes the PSU 40 that is capable of operating to operate. When the PSU 40 is caused to operate, the power control unit 11 resets the latch 111. Thus, unwanted suppression of power consumption is cancelled. When a PSU 40 in which a failure has occurred is replaced, a PSU 40 that is capable of operating exists.

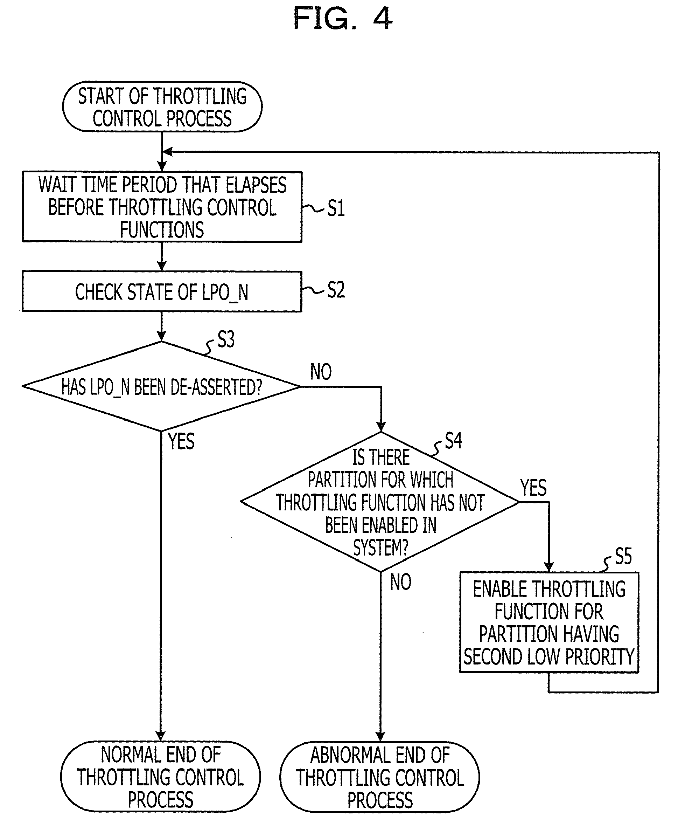

FIG. 4 is a flowchart of a throttling control process. The throttling control process is a process performed, by using assertion of an overcurrent detection signal LPO_N as a trigger, to control the signal switch 14. The throttling control process is implemented by the CPU 101 executing a sub program of the firmware read into the memory 103. Next, this throttling control process will be described in detail with reference to FIG. 4.

As described above, the signal switch 14 outputs, in accordance with the setting set in advance, a logical product whose value is "1" to one or more partitions 25 by using assertion of an overcurrent detection signal LPO_N. Because of this, first, the CPU 101 waits a time period that elapses before power consumption of the partition 25 to which the logical product whose value is "1" has been output is actually suppressed (S1). Once the time period has elapsed, the CPU 101 checks a state of an overcurrent detection signal LPO_N by using a value retained in the latch 112 (S2).

The CPU 101 that has made the check determines whether or not the overcurrent detection signal LPO_N has been de-asserted (S3). When the value retained in the latch 112 is "0", the determination in S3 is Yes and the throttling control process ends here. When the value retained in the latch 112 is "1", the determination in S3 is No and the process proceeds to S4.

In S4, the CPU 101 refers to the partition priority definition file 13a and determines whether or not there is a partition 25 to be targeted for suppression of power consumption. When there is a partition 25 to be targeted for suppression of power consumption, the determination in S4 is Yes and the process proceeds to S5. When there is no partition 25 to be targeted for suppression of power consumption, the determination in S4 is No and the throttling control process ends here.

When the throttling control process ends on the basis of the fact that the determination in S4 is No, the power is not suppressed by the amount by which power has to be suppressed. Because of this, the CPU 101 makes transmission or the like of a message to that effect to, for example, the terminal device 2.

In the embodiment, partitions 25 whose power consumption is to be suppressed are sequentially added in accordance with the partition priority definition file 13a; alternatively, the PSU's 40 used for supply of power and the number of the PSU's 40 may be considered. For example, assuming a failure of one PSU 40, even when an overcurrent detection signal LPO_N is asserted due to the failure of the PSU 40, a partition 25 whose power consumption is to be suppressed may be selected so that the overcurrent detection signal LPO_N is de-asserted.

In the embodiment, all the partitions 25 are equal in terms of the amount by which power consumption is suppressed; alternatively, all the partitions 25 may be different from one another in terms of that amount. Furthermore, an amount by which power consumption is suppressed or a suppression unit may be incorporated into the priority used for suppression of power consumption, and, for each partition, an amount by which power consumption is suppressed when power consumption is suppressed may be selected in addition to selection of whether or not power consumption is to be suppressed.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the spirit and scope of the invention.

## Claims

1. An information processing apparatus comprising:
a processing module;
a power supply device that supplies power to the processing module; and
a signal generation circuit that, when overcurrent of the power supply device is detected, generates a first signal instructing suppression of power consumption of the processing module, and outputs the first signal to the processing module.

2. The information processing apparatus according to claim 1,
wherein the information processing apparatus includes a plurality of processing modules, and
wherein the signal generation circuit outputs the first signal for each of the plurality of processing modules.

3. The information processing apparatus according to claim 2, further comprising:
a setting circuit that sets a processing module selected from the plurality of processing modules to which the first signal is to be transmitted in the signal generation circuit.

4. The information processing apparatus according to claim 3,
wherein the setting circuit sets the processing module by using control information representing a priority used for suppression of power consumption of the plurality of processing modules.

5. The information processing apparatus according to claim 4,
wherein the power supply device outputs a second signal when the overcurrent of the power supply device is detected.

6. The information processing apparatus according to claim 5,
wherein, when the plurality of processing modules are divided into a plurality of groups, the control information is information representing the priority for each of the groups, and
wherein, until output of the second signal is terminated, the setting unit causes, by using the control information, the signal generation unit to increase, in stages on a group-by-group basis, the number of processing modules to which the first signal is to be output.

7. The information processing apparatus according to claim 3, further comprising:
a retaining unit that retains a logical value of the second signal,
wherein the signal generation unit outputs the first signal to the processing module set by the setting unit while the retaining unit is retaining the logical value.

8. A method of controlling power consumption of an information processing apparatus that includes a power supply device and a processing module, the method comprising:
when overcurrent of the power supply device is detected, outputting a first signal instructing suppression of power consumption of the processing module to the processing module.

9. The method of controlling power consumption according to claim 8, the method further comprising:
outputting a second signal when the overcurrent of the power supply device is detected.

10. The method of controlling power consumption according to claim 9,
wherein the information processing apparatus includes a plurality of processing modules, and
wherein, in the case where output of the second signal is not terminated even when the first signal is output, the number of processing modules which receive the first signal is increased.

11. The method of controlling power consumption according to claim 10,
wherein, when the processing modules are divided into a plurality of groups, the number of processing modules which receive the first signal is increased on a group-by-group basis.

12. A program that causes a processor to execute operations, the operations comprising:
detecting overcurrent of a power supply device; and
transmitting a first signal instructing suppression of power consumption to a first processing module.

13. The program according to claim 12, the operations further comprising:
generating a second signal when the overcurrent of a power supply device is detected; and
after transmitting the first signal, determining whether or not output of the second signal has been terminated; and
when determining that output of the second signal has not been terminated, transmitting the first signal to a second processing module.
